(19) Europäisches Patentamt
European Patent Office
Office européen des brevets

(11) Veröffentlichungsnummer: **0 241 672 B1**

(12) **EUROPÄISCHE PATENTSCHRIFT**

(45) Veröffentlichungstag der Patentschrift: **25.09.91**

(51) Int. Cl.5: **C08G 73/14**, C08G 69/42, C08G 69/32

(21) Anmeldenummer: **87102249.7**

(22) Anmeldetag: **17.02.87**

Die Akte enthält technische Angaben, die nach dem Eingang der Anmeldung eingereicht wurden und die nicht in dieser Patentschrift enthalten sind.

(54) **Verfahren zur Herstellung thermoplastisch verarbeitbarer aromatischer Polyamide und Polyamidimide.**

(30) Priorität: **17.04.86 DE 3612935**

(43) Veröffentlichungstag der Anmeldung:
**21.10.87 Patentblatt 87/43**

(45) Bekanntmachung des Hinweises auf die Patenterteilung:
**25.09.91 Patentblatt 91/39**

(84) Benannte Vertragsstaaten:
**AT BE CH DE FR GB IT LI NL**

(56) Entgegenhaltungen:
**DE-A- 2 226 951**
**FR-A- 1 601 964**
**US-A- 4 348 513**
**US-A- 4 358 561**
**US-A- 4 447 574**

(73) Patentinhaber: **HÜLS AKTIENGESELLSCHAFT**
**Patentabteilung / PB 15 - Postfach 13 20**
**W-4370 Marl 1(DE)**

(72) Erfinder: **Finke, Jürgen Dr.**
**Am Alten Sportplatz 17a**
**W-4370 Marl(DE)**
Erfinder: **Bartmann, Martin Dr.**
**Burgstrasse 35**
**W-4350 Recklinghausen(DE)**

**EP 0 241 672 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Gegenstand der Erfindung ist ein Verfahren zur Herstellung von thermoplastischen, aromatischen Polyamiden und/oder Polyamidimiden durch Umamidieren aromatischer Bisamide mit aromatischen Polycarbonsäuren. Aromatische Polyamide mit der wiederkehrenden Einheit

- CO - Ar - CO - NH - Ar - NH -

und
aromatische Polyamidimide mit der wiederkehrenden Einheit

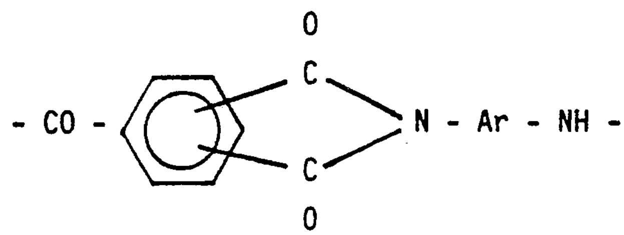

(Ar = aromatischer Rest)

zeichnen sich nicht nur durch hohe Temperaturbeständigkeit und gute mechanische Eigenschaften aus; sie sind auch thermoplastisch verarbeitbar (s. Elias/Vohwinkel, "Neue polymere Werkstoffe für die industrielle Anwendung", 2. Folge, Carl Hanser Verlag 1983, Seite 242 f.).

Bekannte Verfahren zur Herstellung von aromatischen Polyamiden sind:

1. Teftemperatur-Lösungspolykondensation durch Umsetzung von aromatischen Dicarbonsäuredichloriden mit aromatischen Diaminen in polaren Lösungsmitteln (US-PSS 32 87 324, 35 41 056, 36 00 350, 38 19 587, 37 67756, 38 69 429, 36 73 143, 38 17 941, 30 63 966 und DE-AS 22 19 703).

2. Grenzflächenpolykondensation durch Reaktion zwischen einem aromatischen Dicarbonsäuredichlorid und einem aromatischen Diamin an der Grenzfläche einer organischen und einer wäßrigen Phase (DE-OSS 19 08 297, 23 25 139 und DE-PS 30 06 899).

Aromatische Polyamide können auch durch Reaktion von aromatischen Dicarbonsäuren mit aromatischen Diisocyanaten (DE-OS 19 28 435) und durch Umsetzung von aromatischen Dicarbonsäurediarylestern mit aromatischen Diaminen hergestellt werden.

So beschreiben Brode et al. die Darstellung von 4,4'-[Sulfonylbis(p-phenylenoxy)]dianilin (x = 0, Y = $SO_2$) aus p-Aminophenol und 4,4'-Dichlordiphenylsulfon und dessen Kondensation mit aromatischen Säurechloriden wie z. B. Terephthalsäurechlorid zu aromatischen Polyamiden mit Glasübergangstemperaturen ($T_g$) zwischen 230 und 320 °C. (Polymer Prepr. Am. Chem. Soc. Div. Pol. Chem. 15, 761 (1974) und Adv. Chem. Ser. 1975, 142; vgl. CA 84 55 30s und CA 83, 1931 86 f).

Diese Verfahren haben den Nachteil, daß sie auf den Einsatz von aktivierten, schwierig handhabbaren Monomeren angewiesen sind.

Neben diesen Verfahren, bei denen die Kondensation in einem Lösemittel durchgeführt wird, hat es auch Versuche gegeben, Polyamide und Polyamidimide in der Schmelze herzustellen. So ist schließlich ein Verfahren bekannt, nach dem aromatische Polyamide durch Schmelzpolykondensation von bestimmten Dicarbonsäuren mit bestimmten Diaminen in Gegenwart von P-haltigen Verbindungen hergestellt werden (vgl. deutsche Patentanmeldung P 36 09 011.5). Weiterhin beschreibt die US-PS 31 09 836 ein Verfahren zur Herstellung von Polyamiden der wiederkehrenden Einheiten (CO - Ar - NH), das darin besteht, Acetamidobenzoesäure 3 Stunden im Vakuum auf 200 bis 300 °C zu erhitzen. Dieses Verfahren liefert - im Gegensatz zu den Behauptungen in dieser Schriftkeine thermoplastisch verarbeitbaren Produkte, da die Schmelzpunkte der Reaktionsprodukte im Bereich der Zersetzungstemperatur oder darüber liegen.

Ein ähnliches Verfahren wird in der DE-OS 21 18 388 beschrieben. Die Umsetzung findet in fester Phase statt. Daher ist die Reaktionsgeschwindigkeit sehr klein. Eine thermoplastische Verarbeitung des erhaltenen Produkts, beispielsweise in einem Extruder, ist nicht möglich.

Es ist auch vorgeschlagen worden, aromatische Polyamide durch Umamidierung von acylierten aromatischen Aminen in der Schmelze herzustellen. Um die Verarbeitbarkeit zu verbessern, wurden nicht rein

aromatische Ausgangsverbindungen, sondern Gemische mit aliphatischen Vertretern eingesetzt. Die Diamine werden nicht vollständig, sondern nur teilweise acyliert. Schließlich wird der Reaktionsschmelze Essigsäure, Essigsäureanhydrid, Dimethylacetamid oder ein anderes Mittel zur Verbesserung der Fließfähigkeit zugesetzt. (vgl. Keske et al. Polymer Prepr. 25 Part XXV, S. 25 (1984) und US-PS 36 54 227). Die US-PSS 43 58 561, 43 48 513 und 44 47 574 beschreiben die Herstellung von Polyamidimiden durch Umsetzung acylierter aromatischer Diamine mit aromatischen Tricarbonsäureanhydriden und Dicarbonsäuren. Setzt man nur teilweise acylierte Diamine ein, wie dies beschrieben ist, wird im Verlauf der Polykondensation wasserhaltige Essigsäure freigesetzt, deren hohe Korrosionswirkung aufwendige Spezialapparaturen erfordert. Die erhaltenen Produkte weisen sehr hohe Erweichungstemperaturen aus, die im Bereich der Zersetzungstemperatur liegen. Die Produkte sind daher für eine thermoplastische Verarbeitung ungeeignet.

Die Darstellung eines Polyimid-Formpulvers wird in der DE-OS 21 18 388 beschrieben. Man setzt entweder das Dianhydrid einer aromatischen Tetracarbonsäure (IV) mit einem Bisamid (II) um oder führt die Selbstkondensation einer aromatischen Verbindung durch, die gleichzeitig eine Acetamido- und eine Anhydridgruppe aufweist. Auch die US-PS 3 654 227 beschreibt die Umsetzung von aromatischen Bisamiden mit aromatischen Tetracarbonsäuredianhydriden zu oligomeren Polyimiden. In beiden Fällen werden also keine hochmolekularen thermoplastisch verarbeitbaren Polyamide erhalten.

Aufgabe der Erfindung war es, ein Verfahren zu entwickeln, mit dessen Hilfe aromatische Polyamide bzw. Polyamidimide erhalten werden, die nicht die geschilderten Nachteile des Standes der Technik aufweisen.

Diese Aufgabe wurde gelöst, indem

A. mindestens eine der nachstehenden Verbindungen

I. Isophthalsäure

II. Trimellithsäure bzw. deren Anhydrid

III.

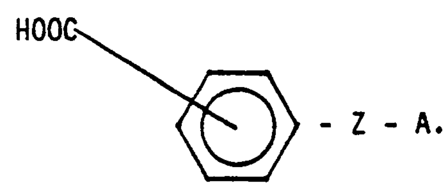

IV. Naphthalincarbonsäure bzw. deren Anhydrid der allgemeinen Formel

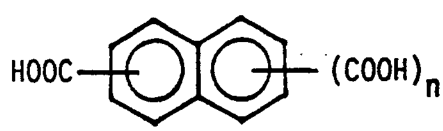

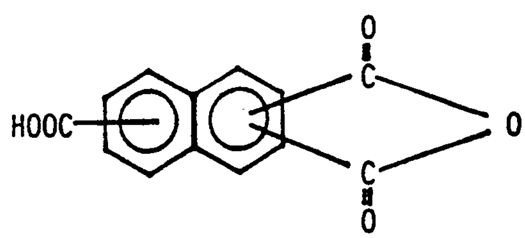

mit

B. mindestens einem der nachstehenden aromatischen Bisamide der allgemeinen Formel

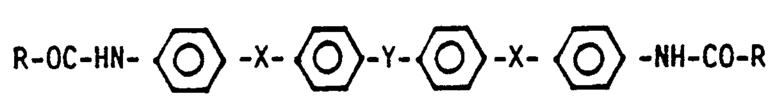

in der Schmelze bei Temperaturen im Bereich von 200 bis 390 °C umgesetzt wird, und wobei Rest A:

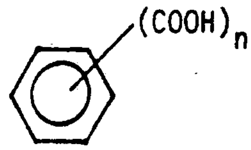

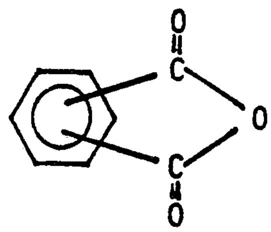

R: $C_{1-4}$-Alkyl
X: -O-; Y: $-SO_2-$
X: $-SO_2-$; Y: -O-
Z: $-CH_2-$; -CO-; -O-; -S-; $-SO_2$;

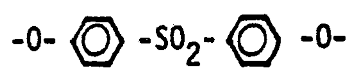

n: 1 oder 2
bedeuten.

Erfindungsgemäß können folgende aromatische Polycarbonsäuren oder deren Anhydride eingesetzt werden:

- Isophathalsäure, die bis zu 60 Molprozent durch Terephthalsäure ersetzt sein kann,
- Trimellithsäure, bzw. deren Anhydrid - eine Säure der allgemeinen Formel

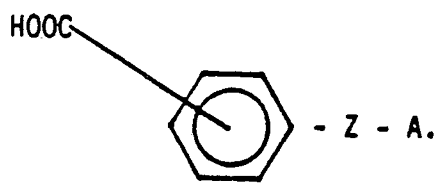

Hierbei steht Z für nachstehende difunktionelle Reste:

$-CH_2-$, $-CO-$, $-O-$, $-S-$, $-SO_2$ und 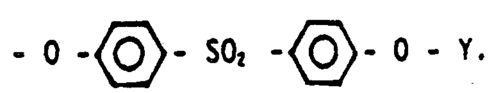

A steht für folgende aromatische Reste

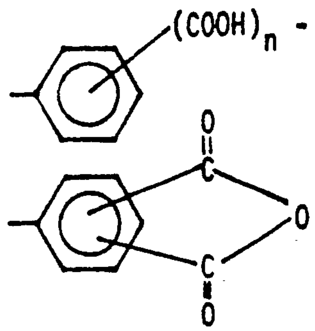

mit n = 1 oder 2

Weiterhin als Carbonsäuren seien Naphthalincarbonsäuren bzw. deren Anhydride mit nachstehenden allgemeinen Formeln

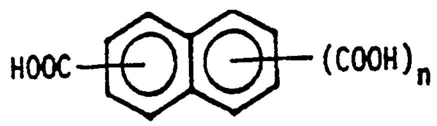

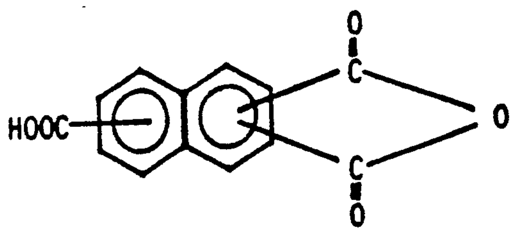

,

genannt.

Erfindungsgemäß können aromatische Bisamide folgender Formel oder deren Mischungen eingesetzt werden:

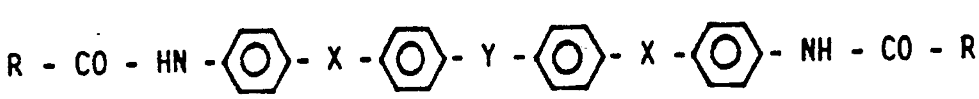

Hierbei steht R für einen Alkylrest mit 1 bis 4 C-Atomen, insbesondere den Methylrest. Beispielsweise seien 4,4'-Bis(4-aminophenoxy)diphenylsulfon (x = O, Y = $SO_2$) und 4,4'Bis(4-aminophenylensulfonyl)-diphenylether (X = $SO_2$, Y = O) genannt. Die Verbindung mit X = O und Y = $SO_2$ wird durch Umsetzung von p-Aminophenol mit 4,4'-Dichlordiphenylsulfon und anschließende Acylierung erhalten.

Die Herstellung der Verbindung mit x = $SO_2$ und Y = O ist gemäß US-PS 3 859 252 und anschließende Acylierung möglich.

Bis zu 50 Molprozent der soeben aufgeführten Bisamide können durch folgende aromatischen Bisamide ersetzt werden:

Aromatische Bisamide der allgemeinen Formel

R - CO - HN - Ar ( Z - Ar $)_m$ - Ar - CO - R

mit m = 0 oder 1, R = C(1-4)-Alkyl
und Z = -O-, -S-, $-SO_2-$, -CO, $-CH_2-$.

Bezogen auf 1 Mol aromatischer Diamine werden 0,95 bis 1,05 Mol, vorzugsweise 1,0 Mol, aromatischer Dicarbonsäure eingesetzt.

Die Umsetzung der aromatischen Dicarbonsäuren bzw. der Anhydride mit den Bisamiden kann in Gegenwart von 0,1 bis 5 %, bezogen auf die eingesetzte Gewichtsmenge Polycarbonsäure(anhydrid) und

Bisamid, eines Katalysators durchgeführt werden.

Geeignete Katalysatoren umfassen anorganische basische Salze insbesondere Alkali- und Erdalkalicarbonate, wie z. B. Calciumcarbonat, sowie Acetate, z. B. Zinkacetat oder Natriumacetat.

Üblicherweise arbeitet man unter Inertgas bei Normaldruck. Es kann jedoch, wenn dies aus irgendwelchen Gründen wünschenswert sein sollte, auch bei leichtem Über- oder Unterdruck gearbeitet werden. Die zur Erzielung ausreichend hochmolekularer Produkte notwendigen Reaktionszeiten liegen zwischen 1 und 4 Stunden. Das Molgewicht der erhaltenen Polykondensate liegt im Bereich von 10 000 bis 200 000, vorzugsweise zwischen 20 000 und 70 000.

Die Polykondensation wird in der Schmelze bei Temperaturen zwischen 200 und 390 °C, vorzugsweise 250 bis 380 °C, durchgeführt. Es gibt insbesondere drei Varianten, in denen das Verfahren durchgeführt werden kann:

I. Die Reaktanden und die Katalysatoren werden gemeinsam aufgeschmolzen und bei Temperaturen zwischen 200 und 280 °C vorkondensiert. Dann wird die Temperatur auf maximal 350 bis 390 °C erhöht und das Präpolymere nachkondensiert. Der stattfindende Molekulargewichtsaufbau ist an der starken Erhöhung der Schmelzviskosität zu erkennen.

II. Eine Pulvermischung der Reaktanden und Katalysatoren wird in einem Kneter unter allmählicher Temperatursteigerung von 220 auf 350 °C solange behandelt, bis das bei der Kondensation entstehende Wasser entfernt ist. Alternativ ist es auch möglich, die Polykondensation in einem Extruder durchzuführen. Auch in diesem Fall beschickt man das Gerät mit einer Pulvermischung der Komponenten und sorgt durch geeignete Temperatureinstellung für eine vollständige Entfernung des Reaktionswassers.

III. Schließlich ist es auch möglich, entsprechend Variante I die Ausgangsprodukte zunächst zu einem Vorkondensat bei einer Temperatur von 200 bis 280 °C umzusetzen und anschließend das Vorkondensat in einem Kneter oder in einem Extruder nachzukondensieren. Im Extruder werden dann üblicherweise Temperaturen von 280 bis 370 °C, vorzugsweise 290 bis 350 °C, erforderlich sein. Diese Variante ist besonders bevorzugt.

Sollte das Endprodukt noch kein ausreichend hohes Molekulargewicht aufweisen, ist es möglich, eine Molekulargewichtserhöhung durch Festphasennachkondensation zu erzielen. Eine solche Vorgehensweise ist dem Fachmann vertraut. Generell ist zu beachten, daß zur Polykondensation der Polyamidimide höhere Temperaturen erforderlich sind als im Falle der Polyamide.

Der Katalysator verbleibt üblicherweise im Produkt. Er kann jedoch, falls es wünschenswert sein sollte, durch Umfällung des Reaktionsproduktes aus einem geeigneten Lösemittel, wie z. B. N-Methylpyrrolidon, entfernt werden.

Zur Herstellung von ausreichend hochmolekularen Produkten ist es notwendig, die während der Polykondensation gebildete Säure aus dem Reaktionssystem zu entfernen. Gemäß Variante I reicht hierzu das Über bzw. Durchleiten von Inertgas aus. Es kann jedoch auch Vakuum angelegt werden.

Am Ende der Polykondensation erhält man eine mehr oder weniger viskose Schmelze des Polymeren, die direkt zu Granulat weiterverarbeitet werden kann. Die anfallenden Produkte können durch Verpressen bei erhöhter Temperatur (> 200 °C) zu Folien verarbeitet werden. Aus den organischen Lösungen der Polyamide in geeigneten, aprotischen polaren Lösemitteln können in üblicher Weise auch Gießfolien hergestellt werden.

Erstaunlicherweise sind die erhaltenen Produkte nicht nur thermoplastisch verarbeitbar, wie dies aus dem Stand der Technik bekannt war, sondern zeigen in der Schmelze Doppelbrechung. Darüber hinaus wird ein hoher J-Wert, eine hervorragende Farbqualität sowie eine überraschend kurze Polykondensationszeit erreicht.

Der J-Wert der erhaltenen Polyamide, der ein Maß für die relative Molmasse darstellt, wird in den folgenden Versuchen in Gemischen aus 1,2-Dichlorbenzol und Phenol im Volumenverhältnis 1 : 1 bestimmt.

Die Charakterisierung flüssigkristalliner Phasen durch Doppelbrechung in der Schmelze wird in der US-PS 4 118 372 beschrieben.

Beispiel 1

23,83 g (0,05 Mol) 4,4'-Bis(4-acetamidophenoxy)diphenylsulfon und 9,61 g (0,05 Mol) Trimellithsäureanhydrid werden unter Stickstoff im PK-Rohr bei 250 °C aufgeschmolzen und 40 Minuten bei 290 °C gerührt. Im Verlauf von 10 Minuten wird die Temperatur auf 350 °C erhöht. Nach 25 Minuten bei 350 °C unter Wasserstrahlvakuum läßt man erkalten. Der goldbraune Festkörper zeigt eine Viskositätszahl J von 90 $cm^3/g$.

Beispiel 2

25,83 g (0,05 Mol) 4,4'-Bis(4-acetamidophenoxy)diphenylsulfon und 9,61 g (0,05 Mol) Trimellithsäuranhydrid, 0,30 g $CaCO_3$ werden nach Aufschmelzen bei 250 °C 15 Minuten bei 280 °C gerührt, die Temperatur wird im Verlauf von 10 Minuten auf 300 °C, dann innerhalb von 10 Minuten auf 320, 340 und schließlich 360 °C erhöht. Nach 2 Minuten bei 360 °C läßt man erkalten. J-Wert = 45 $cm^3/g$

Beispiel 3

25,83 g (0,05 Mol) 4,4'-Bis(4-Acetamidophenoxy)diphenylsulfon, 8,31 g (0,05 Mol) Isophthalsäure und 0,30 g $CaCO_3$ werden 30 Minuten bei 250 °C gerührt; danach wird die Temperatur innerhalb von 20 Minuten auf 350 °C erhöht. Nach 20 Minuten bei 350 °C im Wasserstrahlvakuum läßt man erkalten. J-Wert = 40 $cm^3/g$

**Patentansprüche**

**1.** Verfahren zur Herstellung von thermoplastischen, aromatischen Polyamiden und/oder Polyamidimiden durch Umamidieren aromatischer Bisamide mit aromatischen Polycarbonsäuren bzw. -anhydride (Verbindungen A.) dadurch gekennzeichnet, daß

A. mindestens eine der nachstehenden Verbindungen

I. Isophthalsäure

II. Trimellithsäure bzw. deren Anhydrid

III.

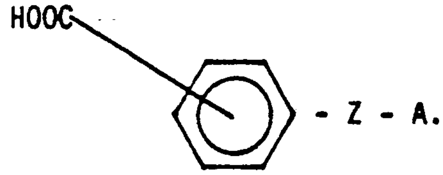

IV. Naphthalincarbonsäure bzw. deren Anhydrid der allgemeinen Formel

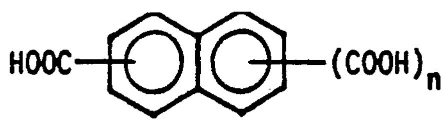

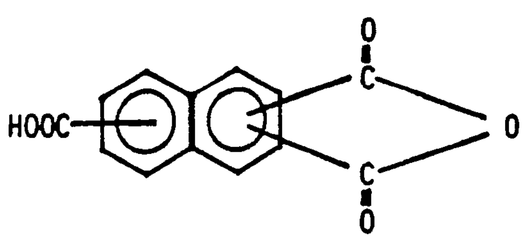

mit

B. mindestens einem der nachstehenden aromatischen Bisamide der allgemeinen Formel

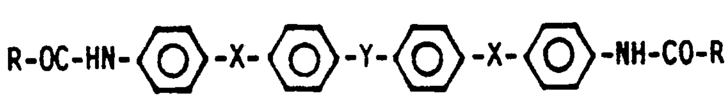

in der Schmelze bei Temperaturen im Bereich von 200 bis 390 °C umgesetzt wird, und wobei Rest A:

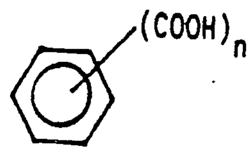

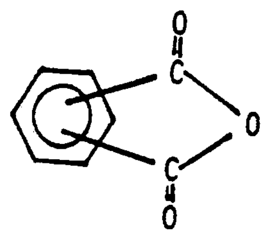

R: $C_{1-4}$-Alkyl
X: -O-; Y: $-SO_2-$ oder
X: $-SO_2-$; Y: -O-
Z: $-CH_2$; -CO-; -O-; -S-; $-SO_2$;

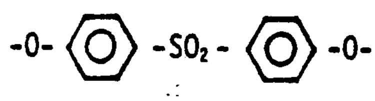

n: 1 oder 2
bedeuten.

2. Verfahren nach Anspruch 1, dadurch gekennzeichnet, daß als Bisamid 4,4'-Bis(4-acetamidophenoxi)diphenylsulfon eingesetzt wird.

**Claims**

1. A process for the preparation of a thermoplastic, aromatic polyamide and/or polyamide-imide by transamidating an aromatic bisamide using an aromatic polycarboxylic acid, characterised in that
   A. at least one of the polycarboxylic acids below
      I. isophthalic acid,
      II. trimellitic acid or the anhydride thereof,
      III.

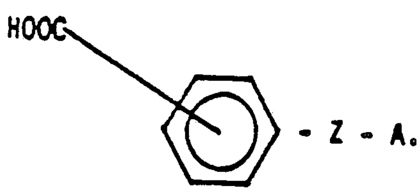

IV. naphthalenecarboxylic acid or the anhydride thereof, of the general formula

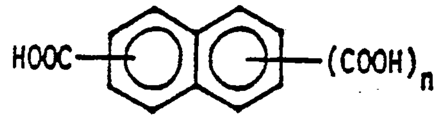

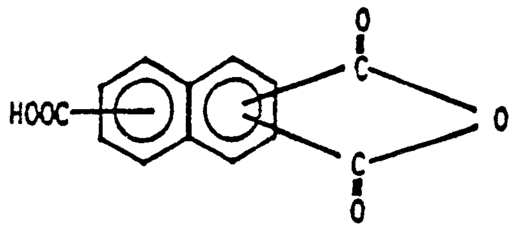

is reacted with

B. at least one of the following aromatic bisamides of the general formula

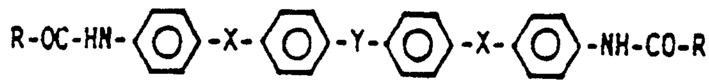

in the melt at a temperature in the range from 200 to 390° C, and where

A is

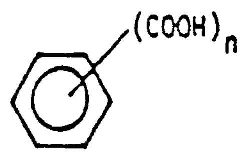

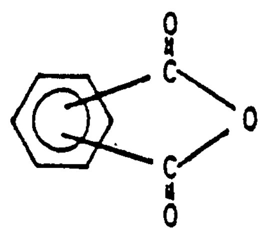

R is $C_{1-4}$-alkyl,

x is -O- and Y is $-SO_2-$ or

X is $-SO_2-$ and Y is -O-,

Z is $-CH_2$, -CO-, -O-, -S-, $-SO_2-$

or

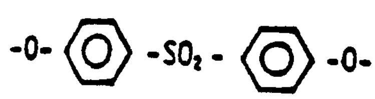

and

n is 1 or 2.

2. A process according to claim 1, characterized in that, as the bisamide, 4,4'-bis(4-acetamidophenoxy)-diphenyl sulphone is employed.

**Revendications**

1. Procédé de préparation de polyamides et/ou de polyamides-imides aromatiques thermoplastiques, par transamidation de bis-amides aromatiques avec des acides polycarboxyliques aromatiques, caractérisé par le fait que

A. On fait réagir à l'état fondu, à des températures comprises dans un domaine de 200 à 390 °C, l'un au moins des acides polycarboxyliques suivants :

I. L'acide isophtalique,

II. L'acide trimellitique ou son anhydride,

III. Un acide de formule générale :

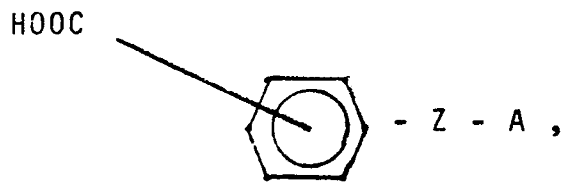

,

IV. Un acide naphtalène-carboxylique ou son anhydride, de la formule générale :

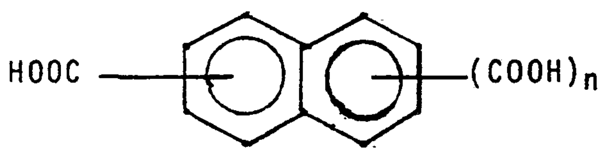

,

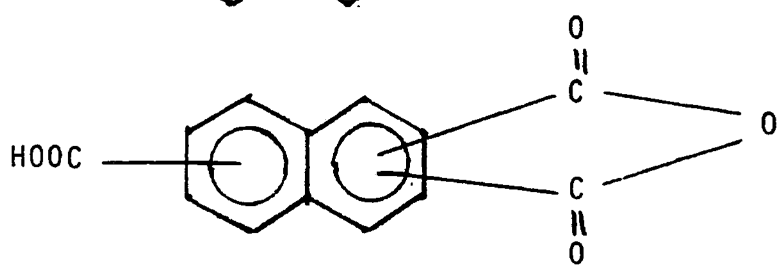

B. au moins l'une des bis-amides aromatiques suivantes répondant à la formule générale

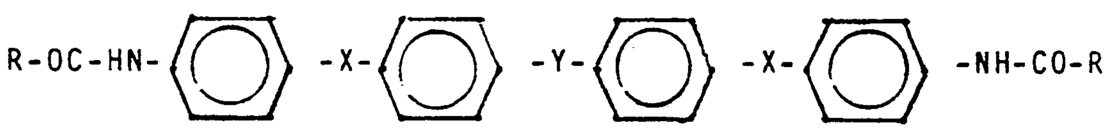

,

Z représentant l'un des radicaux bifonctionnels ci-après :

$-CH_2-$, $-CO-$, $-0-$, $-S-$, $SO_2$

et

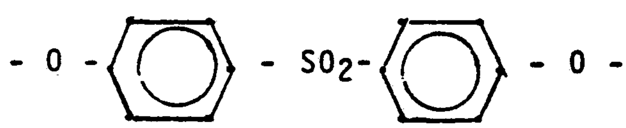

,

A représentant l'un des restes aromatiques suivants

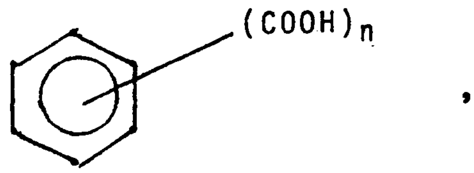

n étant égal à l'unité ou à 2,

et

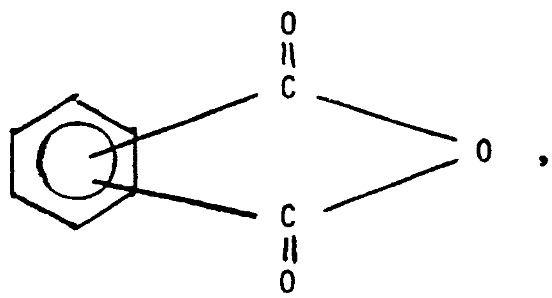

R étant un alcoyle en $C_1$ à $C_4$, X étant un radical - O -
Y étant un radical - $SO_2$ -
ou
X étant un radical - $SO_2$ - et Y étant un radical - O -

**2.** Procédé selon la revendication 1,
caractérisé par le fait que l'on utilise en tant que bis-amide, la 4,4'-bis-(4-acétamido-phénoxy)-diphényl-sulfone.